# EUROPÄISCHE PATENTSCHRIFT

(11) **EP 3 464 904 B1**
(45) Veröffentlichungstag und Bekanntmachung des Hinweises auf die Patenterteilung: **23.02.2022**
(21) Anmeldenummer: 17729006.1
(22) Anmeldetag: 19.05.2017
(51) Int. Cl.: F04D 29/42

(54) **ZENTRIFUGALPUMPE FÜR HITZEEMPFINDLICHE FLÜSSIGE NAHRUNGSMITTELPRODUKTE UND LAUFRAD FÜR EINE SOLCHE ZENTRIFUGALPUMPE**
CENTRIFUGAL PUMP FOR HEAT-SENSITIVE FLUID FOOD PRODUCTS AND IMPELLER FOR A CENTRIFUGAL PUMP OF THIS TYPE
POMPE CENTRIFUGE POUR PRODUITS ALIMENTAIRES LIQUIDES SENSIBLES À LA CHALEUR ET ROTOR POUR UNE POMPE CENTRIFUGE DE CE TYPE

(30) Priorität: 03.06.2016 DE 102016006623; 14.07.2016 DE 102016008557
(43) Veröffentlichungstag der Anmeldung: 10.04.2019
(73) Patentinhaber: GEA TDS GmbH, 31157 Sarstedt (DE)
(72) Erfinder: BUSS, Helmut, 46359 Heiden (DE); GEHLING, Jürgen, 48703 Stadtlohn (DE); LÜTKEBRUNS, Günter, 48599 Gronau-Epe (DE); SCHWENZOW, Uwe, 48683 Ahaus (DE); TACKE, Ludger, 46342 Velen (DE); TASLER, Franz, 48653 Coesfeld (DE)
(74) Vertreter: Hauck Patentanwaltspartnerschaft mbB
(86) Internationale Anmeldenummer: PCT/EP2017/000606
(87) Internationale Veröffentlichungsnummer: WO 2017/207092

(56) Entgegenhaltungen:
- EP-B1- 0 794 706
- JP-A- 2011 032 983
- US-A- 3 711 218
- US-A1- 2010 247 340

## Beschreibung

### TECHNISCHES GEBIET

Die Erfindung betrifft eine Zentrifugalpumpe zur Förderung hitzeempfindlicher flüssiger Nahrungsmittelprodukte, wie Molkenproteinkonzentrate, Babynahrung, flüssige Babynahrungskonzentrate, nahrhafte Getränke oder Käsereimilch, mit einem Einlass, einem Auslass, einem Pumpengehäuse, welches von wenigstens einem Gehäusedeckel und einer Gehäuserückwand gebildet ist, einer im Pumpengehäuse ausgebildeten und in fluidgängiger Verbindung mit dem Einlass und dem Auslass stehenden Pumpenkammer, einem in der Pumpenkammer drehbar aufgenommenen Laufrad mit Schaufeln, einem zwischen zwei benachbarten Schaufeln jeweils ausgebildeten Schaufelkanal, der zum Gehäusedeckel hin offen und zur Gehäuserückwand hin durch eine Laufradrückseite geschlossen ausgebildet ist, einem zwischen der Gehäuserückwand und dem Laufrad vorgesehenen hinteren Laufradspalt und einem zwischen dem Gehäusedeckel und dem Laufrad vorgesehenen vorderen Laufradspalt sowie ein Laufrad für eine solche Zentrifugalpumpe.

Hitzeempfindliche flüssige Nahrungsmittelprodukte der vorgenannten Art enthalten relativ viel Proteine, viel Trockenmasse und wenig Wasser, und sie können eine niedrige, mittlere oder hohe Viskosität besitzen. Der Begriff der Hitzeempfindlichkeit soll im Folgenden so verstanden werden, dass diese Nahrungsmittelprodukte, vorzugsweise bei Temperaturen über 100 °C, zum Anbrennen, d.h. unter diesen Bedingungen zur Belagbildung an den Wandungen der sie fördernden Zentrifugalpumpe neigen. Diese Belagbildung wird auch als Produkt-Fouling bezeichnet. Das Produkt-Fouling verringert die Standzeit bzw. die Betriebszeit der Zentrifugalpumpe zwischen zwei notwendigen Reinigungszyklen.

### STAND DER TECHNIK

Ein besonders kritisches Anwendungsgebiet für die Zentrifugalpumpe der gattungsgemäßen Art, für das bislang noch keine befriedigende Lösung bekannt ist, ist ihre Anordnung hinter einem Infusorbehälter, in dem das in Rede stehende flüssige Nahrungsmittelprodukt eine Direkterhitzung mittels kulinarischem Wasserdampf erfährt.

Es ist bei Erhitzungsanlagen mit einem Infusorbehälter bekannt, die Abförderung des direkt erhitzten flüssigen Nahrungsmittelprodukts aus dem Infusorbehälter mit einer rotierenden Verdrängerpumpe, beispielsweise einer Zahnradpumpe, durchzuführen, wobei deren Gehäuse in der Regel eine Kühlung aufweist und das Gehäuse sich unmittelbar an die Auslassöffnung des Infusorbehälters anschließt (EP 0 784 706 B1). Eine Zahnradpumpe besitzt, bauartbedingt, eine Selbstreinigungsfähigkeit, weil die Zahnräder eng miteinander kämmen und an den zugeordneten Gehäusewandungen entlangschaben und somit eine stetig aufwachsende Belagbildung (Produkt-Fouling) verhindern.

Die WO 2011/101077 A1, die die Priorität der DE 10 2010 008 448 A1 in Anspruch nimmt, offenbart eine UHT-Anlage zur Behandlung hitzeempfindlicher flüssiger Nahrungsmittelprodukte, in der unter Anderem unterstromig eines Infusorbehälters in einer Verbindungsleitung zu einer Vakuumkammer eine erste Fördereinrichtung angeordnet ist, die als Verdrängerpumpe ausgebildet ist. Der Infusorbehälter verfügt in seinem unterem Bereich, einem sich bis zu einer Auslassöffnung verjüngenden Bodenteil, über eine Kühlung zur Kühlung dieses Bodenteils. Die Verdrängerpumpe kann dabei in einem nicht quantifizierten Abstand zu der Austrittsöffnung aus dem Infusorbehälter angeordnet sein oder diese Austrittsöffnung mündet im Grenzfall unmittelbar in die Verdrängerpumpe ein. Bei der Verdrängerpumpe wird vorzugsweise eine rotierende eingesetzt, die beispielsweise, wie vorstehend erwähnt, als Zahnrad- oder auch als Flügelzellen-, Schraubenrad-, Impeller- oder Drehkolbenpumpe ausgebildet sein kann. Oszillierend arbeitende Verdrängerpumpen sind grundsätzlich ebenfalls einsetzbar, wenn die durch den oszillatorischen Betrieb bedingten Volumenstromschwankungen durch geeignete Mittel ausgeglichen werden oder im Behandlungsprozess keine Rolle spielen.

In der WO 2016/012026 A1 ist die aus der EP 0 794 706 B1 bekannte Anlage zur Wärmebehandlung hitzeempfindlicher flüssiger Nahrungsmittel dahingehend abgewandelt, dass sich nunmehr, bei ansonsten unveränderter Konfiguration der einzelnen Aggregate der Anlage, der den Boden des Infusorbehälters umgebende und kühlende Kühlmantel bis hinunter an die Pumpe und, gemäß einer vorteilhaften Ausführungsform, in das Pumpengehäuse hinein erstreckt. Bei der Pumpe handelt es sich um eine Verdrängerpumpe, vorzugsweise um eine Zahnrad- oder Kolbenpumpe. Es wird aber auch eine Zentrifugalpumpe beansprucht, ohne dass angegeben ist, wie diese Zentrifugalpumpe ausgestaltet ist. Es kann daher davon ausgegangen werden, dass hier eine dem Fachmann in ihrem grundsätzlichen Aufbau bekannte, herkömmliche und hydraulisch optimierte Zentrifugalpumpe vorgesehen ist.

In der WO 2010/086082 A1, die die Priorität der DE 10 2009 006 248 A1 in Anspruch nimmt, ist ein Infusionssystem für ein zu erwärmendes flüssiges Lebensmittelprodukt beschrieben, bei dem eine Infusionskammer einen unteren Bodenteil mit einer Kühlung aufweist. Die Infusionskammer findet ihre Fortsetzung in einem sich an eine Auslassöffnung im unteren Bodenteil anschließenden, ebenfalls eine Kühlung aufweisenden Auslassrohr. Es bleibt offen, ob das Auslassrohr unmittelbar oder mittelbar über eine Verbindungsleitung in eine wie auch immer ausgestaltete Fördereinrichtung einmündet.

Eine Zentrifugalpumpe für unproblematische flüssige Nahrungsmittelprodukte, wie beispielsweise Wasser, ist in ihrem grundsätzlichen Aufbau hinlänglich bekannt. Sie ist derart ausgestaltet und ausgelegt, dass sie einen möglichst hohen hydraulischen Wirkungsgrad aufweist, d.h. dass sie mit einer bestimmten Antriebsenergie ein möglichst großes Produkt aus Volumenstrom und Förderhöhe erreicht. In einem in der Regel aus mindestens zwei Gehäuseteilen bestehenden Pumpengehäuse ist auf einer Welle ein Laufrad mit Schaufeln angeordnet. Innerhalb des Pumpengehäuses schließt sich an einen ringförmig umlaufenden Laufradaustrittsquerschnitt außenseits ein Leitapparat in Form beispielsweise eines Spiralgehäuses oder eines schaufellosen Ringraums an. An dem saugseitigen Gehäuseteil, einem Gehäusedeckel, befindet sich koaxial zur Laufradachse ein Einlass, ausgebildet in der Regel als sogenannter Saugstutzen, und an dem druckseitigen Gehäuseteil, umfangsseits tangential ausmündend, ein Auslass, der in der Regel als sogenannter Druckstutzen ausgebildet ist. Mit dem der Saugseite abgewandten Gehäuseteil, der Gehäuserückwand, bildet eine Laufradrückseite einen sog. hinteren Radseitenraum, der mit Blick auf einen guten hydraulischen Wirkungsgrad der Zentrifugalpumpe in der Regel eine geringe axiale Erstreckung aufweist. Diese axiale oder spaltweite Erstreckung ist gerade so eng bemessen, dass bei angemessenen Fertigungstoleranzen die mechanische Funktionsfähigkeit der Zentrifugalpumpe sichergestellt ist. In gleicher Weise ist eine Laufradvorderseite, und hier sind es bei einem sogenannten offenen Laufrad die vorderen, stirnseitigen, freien Schaufelkanten, mit möglichst engem Spalt an den Verlauf des Gehäusedeckels angepasst. Zur Reduzierung einer Axialkraft, die aus den auf das Laufrad beiderseits wirkenden Druckkräften resultiert, sind im Nabenbereich des Laufrades und über dessen Umfang verteilt in der Laufradrückseite in der Regel mehrere, im Durchmesser relativ kleine Druckausgleichsbohrungen angeordnet.

Aus der US 8,113,802 B2 ist eine Zentrifugalpumpe zur Förderung hitzeempfindlicher flüssiger Nahrungsmittelprodukte bekannt, bei der ein hinterer und ein vorderer Laufradspalt vorgesehen ist und das Laufrad als ein zum Gehäusedeckel hin offenes und zur Gehäuserückwand hin durch eine Laufradrückseite geschlossenes Laufrad ausgebildet ist. Der vordere Laufradspalt zwischen den freien Enden der Schaufeln des Laufrades und dem Gehäusedeckel ist sehr eng bemessen, vorzugsweise weniger als 2 mm, damit hier eine gute Abdichtung mit geringen Leckageverlusten sichergestellt ist.

Die AT 413 743 B beschreibt eine als Radialpumpe ausgebildete Zentrifugalpumpe, insbesondere Kühlmittelpumpe für eine Brennkraftmaschine, bei der zumindest eine Laufradschaufel als temperatur- und/oder drehzahlsensitives Element ausgebildet ist. Dadurch ist die zumindest eine Laufradschaufel durch Temperaturänderungen des Kühlmittels und/oder durch die bei hohen Drehzahlen aus der Kühlmittelströmung bewirkten Corioliskräfte verformbar. Durch die jeweilige Verformung soll die Fördermenge in gewünschter Weise nach oben oder unten von der Fördermenge einer starren Laufradschaufel abweichen. In der US2010/247340 ist eine Zentrifugalpumpe zur Förderung hitzeempfindlicher flüssiger Nahrungsmittelprodukte nach dem Stand der Technik offenbart.

Bei hitzeempfindlichen flüssigen Nahrungsmittelprodukten der einleitend genannten Art kommt es vorrangig darauf an, dass bei deren Förderung durch eine Zentrifugalpumpe eine möglichst geringe Neigung zu Ablagerungen an den Wandungen der Zentrifugalpumpe besteht. Es hat sich beispielsweise bei der direkten Erhitzung von sehr hitzeempfindlichen flüssigen Nahrungsmittelprodukten in einem Infusorbehälter und anschließender Abförderung des erhitzten flüssigen Nahrungsmittelproduktes aus dem Infusorbehälter mittels einer nachgeschalteten Zentrifugalpumpe üblicher Bauart, d.h. hydraulisch optimierter Bauart, gezeigt, dass sich diese Zentrifugalpumpe in kürzester Zeit, wobei es sich diesbezüglich um Sekunden bis wenige Minuten handelt, durch Produkt-Fouling zugesetzt und damit außer Betrieb gesetzt hat. Besonders kritische Bereiche sind hier der Saugbereich des Laufrades, weil hier nicht gelöste Gase und insbesondere nicht kondensierter Wasserdampf das Produkt-Fouling verstärken können, und der enge spaltweite hintere Radseitenraum.

Für die konkrete Ausgestaltung einer Zentrifugalpumpe in einer Anlage zur Behandlung hitzeempfindlicher flüssiger Nahrungsmittelprodukte, in der letzteres eine Direkterhitzung mittels kulinarischem Wasserdampf erfährt, ist bislang noch keine befriedigende Lösung mit Blick auf eine hinreichend lange Standzeit der Zentrifugalpumpe bekannt.

Es ist Aufgabe der vorliegenden Erfindung, eine Zentrifugalpumpe zu schaffen, die bei der Förderung von hitzeempfindlichen flüssigen Nahrungsmittelprodukten der eingangs genannten Art, insbesondere bei deren Abförderung aus einem Infusorbehälter zur direkten Erhitzung des flüssigen Nahrungsmittelprodukts mit Wasserdampf, die Neigung zu Produkt-Fouling vermindert und so gegenüber einer hydraulisch optimierten Zentrifugalpumpe nach dem Stand der Technik eine deutlich verlängerte Standzeit aufweist. Eine weitere Aufgabe besteht darin, eine vorzugsweise handelsübliche Zentrifugalpumpe so zu modifizieren, dass diese das Wachstum von Produkt-Fouling in ihren kritischen Bereichen hemmt und so die gewünschte Standzeitverlängerung erreicht wird.

### ZUSAMMENFASSUNG DER ERFINDUNG

Diese Aufgabe wird durch eine Zentrifugalpumpe mit den Merkmalen des Anspruchs 1 gelöst. Vorteilhafte Ausgestaltungen der erfindungsgemäßen Zentrifugalpumpe sind Gegenstand der Unteransprüche.

Die Erfindung geht aus von einer an sich bekannten Zentrifugalpumpe mit einem Einlass, einem Auslass, einem Pumpengehäuse, welches von wenigstens einem Gehäusedeckel und einer Gehäuserückwand gebildet ist, einer im Pumpengehäuse ausgebildeten und in fluidgängiger Verbindung mit dem Einlass und dem Auslass stehenden Pumpenkammer und einem in der Pumpenkammer drehbar aufgenommenen Laufrad mit Schaufeln. Zwischen zwei benachbarten Schaufeln ist jeweils ein Schaufelkanal ausgebildet, der zum Gehäusedeckel hin offen und zur Gehäuserückwand hin durch eine Laufradrückseite geschlossen ausgebildet ist. Zwischen der Gehäuserückwand und dem Laufrad ist ein hinterer Laufradspalt und zwischen dem Gehäusedeckel und dem Laufrad ist ein vorderer Laufradspalt vorgesehen.

Der erfinderische Grundgedanke besteht darin, das Laufrad selbst und seine angrenzenden kritischen Bereiche bis zur unmittelbaren pumpengehäuseseitigen Berandung der Laufradvorderseite und der Laufradrückseite mit dem zu fördernden flüssigen Nahrungsmittelprodukt zu spülen und dort damit ein Produkt-Fouling zu hemmen, wobei ein weiterer erfinderischer Grundgedanke darin besteht, im Zuge der erfindungsgemäßen Spülung gleichzeitig wenigstens die pumpengehäuseseitige Berandungen im Bereich des Gehäusedeckels zu kühlen.

Das flüssige Nahrungsmittelprodukt dient somit mit einem Teil seines in dem Laufrad geförderten Volumenstroms planmäßigen Spülungen des Pumpengehäuses und des Laufrades selbst. Dabei übersteigen die Volumenströme der planmäßigen Spülungen die zwangsläufigen Ausgleichsströmungen im Pumpengehäuse, die sich aus einer üblichen hydraulisch optimierten Auslegung der Zentrifugalpumpe ergeben, bis zu einem Mehrfachen. Durch die Kühlung wird die Neigung zum Anbrand von flüssigem Nahrungsmittelprodukt an den Wandungen der Zentrifugalpumpe verringert. Dies geschieht unter einem planmäßigen Verzicht auf einen optimalen hydraulischen Wirkungsgrad. In der erfindungsgemäßen Zentrifugalpumpe wird im Laufrad ein Volumenstrom gefördert, der um die Summe aller quasi rezirkulierenden Spülvolumenströme gegenüber dem über den Saugstutzen angesaugten Volumenstrom vergrößert ist. Die Spülvolumenströme führen Volumina aus dem Kern der Schaufelkanäle an die gekühlten Wandungen des Pumpengehäuses und von dort wieder in das Laufrad hinein, wobei der Kühleingriff nicht kondensierten Wasserdampf kondensieren lässt und somit die Neigung zum Produkt-Fouling vermindert wird.

Die vorstehend dargelegten Zusammenhänge zeigen auf, dass eine erfindungsgemäß mit dem von ihr geförderten flüssigen Nahrungsmittelprodukt gespülte Zentrifugalpumpe ein Laufrad besitzt, dessen hydraulische Förderleistung, bezogen auf das Laufrad, höher sein muss als die sich am Druckstutzen im Endergebnis tatsächlich einstellende hydraulische Förderleistung der Zentrifugalpumpe. Wenn zur Realisierung einer gespülten Zentrifugalpumpe der in Rede stehenden Art eine hydraulisch optimierte Zentrifugalpumpe gewählt wird, dann muss deren Nennförderleistung um die vorstehend erwähnte Förderleistungsdifferenz entsprechend höher gewählt werden. Bei gleicher Nennförderleistung wird ein äußerer Laufraddurchmesser der gespülten Zentrifugalpumpe daher größer sein müssen als ein solcher für eine hydraulisch optimierte Zentrifugalpumpe.

Die konkrete Lösung zur Umsetzung der vorstehend genannten erfinderischen Grundgedanken besteht gemäß einer ersten Ausführungsform der Zentrifugalpumpe darin, dass der hintere und/oder der vordere Laufradspalt, die zwangsläufig jeweils zwischen Laufrad und Pumpengehäuse gegeben sein müssen, gegenüber jeweils einem diesbezüglichen minimalen hinteren und vorderen Laufradspalt, der die mechanische Funktionsfähigkeit der Zentrifugalpumpe sicherstellt, durch Reduzierung der Breite des Laufrades im Bereich des vorderen und des hinteren bis zu einem Mehrfachen vergrößert sind/ist. Durch die Vergrößerung dieser Laufradspalte wird die Generierung der erwünschten und notwendigen Spülströmungen erst ermöglicht. Die jeweilige Weite des vorderen und des hinteren Laufradspaltes kann in Abhängigkeit von den spezifischen Eigenschaften des flüssigen Nahrungsmittelprodukts bemessen werden.

Zur Intensivierung der Kühlung sieht die Erfindung vor, auch die Gehäuserückwand mit einem von einem Kühlmittel durchströmbaren Kühlmittelraum zu versehen. Eine lückenlose Kühlung des Pumpengehäuses wird sichergestellt, wenn, wie dies auch vorgeschlagen wird, zusätzlich zu dem gehäusedeckelseitigen Kühlmittelraum und dem gehäuserückwandseitigen Kühlmittelraum der Einlass der Zentrifugalpumpe in Form eines am Gehäusedeckel vorspringenden Saugstutzens ausgebildet ist, der mit einem saugstutzenseitigen Kühlmittelraum versehen ist. Eine derartige Ausführung ist mit Blick auf die erfindungsgemäße Zentrifugalpumpe nicht zwingend. Sie ist, ebenso wie eine Zentrifugalpumpe, bei der auf die Ausbildung eines Saugstutzens verzichtet wird, geeignet für eine unmittelbare Verbindung zwischen dem Saugstutzen der Zentrifugalpumpe und einem in seinem Bodenteil mit einem Kühlmittelraum versehenen Infusorbehälter, wobei sich dieser Kühlmittelraum bis hinunter zu einer aus dem Bodenteil ausmündenden Auslassöffnung erstreckt, die dann das finale Ende des Infusorbehälters darstellt. Der Saugstutzen kann dann in dieser Anordnung die Funktion eines rohrförmigen Abschnitts erfüllen, der sich an die finale Auslassöffnung des Infusorbehälters anschließt. Es ist auch eine Anordnung mit der erfindungsgemäßen Zentrifugalpumpe möglich, bei der die Auslassöffnung als finales Ende des Infusorbehälters unmittelbar an dem Gehäusedeckel der Zentrifugalpumpe angeordnet ist, wobei dort auf die Ausbildung eines Saugstutzens verzichtet wird.

In allen Ausführungen, nämlich bei einer erfindungsgemäßen Zentrifugalpumpe mit oder ohne Saugstutzen in Kombination mit einem Infusorbehälter, bei dem die Auslassöffnung oder ein sich an diese anschließender rohrförmiger Abschnitt das finale Ende darstellt, ist eine Ansammlung von erhitztem flüssigem Nahrungsmittelprodukt im Bodenteil des Infusorbehälters, d.h. eine Ansammlung mit schwankendem Füllstand, unerwünscht, da eine solche Ansammlung zu einer unerwünschten und undefinierten Verweilzeit führt, die verhindert werden soll. Die erfindungsgemäße Zentrifugalpumpe hat in einer Verbindung mit einem Infusorbehälter die Aufgabe, in letzterem anfallendes erhitztes flüssiges Nahrungsmittelprodukt aus diesem unverzüglich und vollständig abzuführen, ohne dabei, auch bei stoßweisem Anfall, zu verstopfen.

Zur Intensivierung der Spülung wird weiterhin vorgeschlagen, dass jeder Schaufelkanal zwischen zwei benachbarten Schaufeln des Laufrades im Bereich seiner begrenzenden Laufradrückseite über wenigstens eine die Laufradrückseite durchdringende Spülbohrung mit dem hinteren Laufradspalt in fluidgängiger Verbindung steht. Hierdurch lässt sich die radiale Eingriffstiefe der zugeordneten Spülströmung festlegen. Bei der Spülbohrung handelt es sich im allgemeinsten Falle um Durchtrittsöffnungen beliebiger Form, d.h. eine einfach herzustellende Kreisform ist nicht zwingend.

Eine bevorzugte Ausgestaltung sieht vor, dass der vordere Laufradspalt an einem äußeren Laufraddurchmesser des Laufrades eine maximale Vergrößerung erfährt und dass diese Vergrößerung bis in den Bereich des Eintritts in die Schaufelkanäle kontinuierlich bis auf den minimalen vorderen Laufradspalt abnimmt. Es wird diesbezüglich vorgeschlagen, dass die Reduzierung der Breite des Laufrades an dem äußeren Laufraddurchmesser 40 bis 55 %, vorzugsweise 50 bis 55 % der Breite eines hydraulisch optimierten Laufrades beträgt. Im Bereich des vorderen Laufradspaltes bildet sich eine zweite Spülströmung aus, die sich aus dem Bereich des Auslasses der Zentrifugalpumpe in den Bereich des Einlasses des Laufrades erstreckt. Durch die Vergrößerung des vorderen Laufradspaltes wird die dort auch bei engem Laufradspalt vorliegende Umströmung der freien Vorderkante der Schaufeln des offenen Laufrades, getrieben durch den Druckunterschied zwischen Druck- und Saugseite der Schaufel, deutlich verstärkt, wodurch eine dritte Spülströmung planmäßig generiert wird.

Bezüglich der Bemessung des hinteren Laufradspaltes hat es sich als zielführend herausgestellt, wenn der Zugang zum minimalen hinteren, vorzugsweise radial orientierten Laufradspalt, der von einem äußeren Laufraddurchmesser des Laufrades seinen Anfang nimmt und sich bis zu einer Nabe des Laufrades erstreckt, durch Reduzierung des äußeren Laufraddurchmessers um bis zu 5 mm erweitert ist. Darüber hinaus besteht eine vorteilhafte erfindungsgemäße Vergrößerung des hinteren Laufradspaltes darin, dass die Laufradrückseite im Bereich zwischen der Spülbohrung und der Nabe des Laufrades eine ringflächenförmige Ausdrehung erfährt, deren axiale Tiefe bis zu 2 mm, vorzugsweise 0,5 bis 1 mm, beträgt.

Die Positionierung, formmäßige Ausgestaltung und Bemessung der Spülbohrung sind Merkmale, mit denen die zugeordnete Spülströmung hinsichtlich ihrer radialen Eingriffstiefe, ihrer Ausformung und quantitativen Intensität festgelegt wird. Es ist bei der Anordnung einer einzigen Spülbohrung in jedem Schaufelkanal strömungs- und fertigungstechnisch zweckmäßig, wenn alle diese Spülbohrungen auf einem einzigen Lochkreis mit entsprechender Teilung angeordnet sind.

Es hat sich hinsichtlich der Positionierung der Spülbohrung innerhalb des Schaufelkanals als vorteilhaft erwiesen, wenn der geometrische Ort für die jeweilige Durchdringungsstelle der Spülbohrung mit der Laufradrückseite, der auch einen Lochkreisdurchmesser festlegt, folgendermaßen bestimmt ist:
- näherungsweise durch die Mitte des Schaufelkanals, bezogen auf den Abstand der Schaufeln an der Durchdringungsstelle, und
- näherungsweise durch die Mitte einer maximalen Stromfadenlänge des Schaufelkanals zwischen dessen Ein- und Austritt.

Die Spülbohrung ist entweder kreisförmig mit einem Bohrungsdurchmesse ausgeführt oder sie weist eine von der Kreisform abweichende Form mit einem für diese Form maßgeblichen hydraulischen Durchmesser auf. Der hydraulische Durchmesser bemisst sich in an sich bekannter Weise als Quotient aus dem vierfachen Durchtrittsquerschnitt der Spülbohrung und dem Umfang der Spülbohrung. Es hat sich als zielführend erwiesen, wenn der Bohrungsdurchmesser oder der hydraulische Durchmesser 30 bis 50 % und in diesem Bereich vorzugsweise 40 bis 50 % vom Abstand der Schaufeln an der Durchdringungsstelle beträgt.

Die Erfindung sieht gemäß einer weiteren Ausgestaltung auch mehr als eine Spülbohrung in jedem Schaufelkanal vor, wobei jede der mehreren Spülbohrungen eines Schaufelkanals auf einem zugeordneten Lochkreis angeordnet ist und die Lochkreise radial voneinander beabstandet sind. Dabei ist es zweckmäßig, wenn die Durchtrittsquerschnitte der Spülbohrungen auf den verschiedenen Lochkreisen mit kleiner werdendem Lochkreisdurchmesser kleiner werden, weil die treibende Druckdifferenz an der Spülbohrung mit kleiner werdendem radialen Abstand der Spülbohrung von der Rotationsachse der Zentrifugalpumpe größer wird.

Um eine den spezifischen Eigenschaften des erhitzten flüssigen Nahrungsmittelprodukts gerecht werdende Kühlung sicherzustellen, sieht die Erfindung die nachfolgenden Schaltungen der Kühlmittelräume vor. Gemäß einem diesbezüglichen ersten Vorschlag sind der saugstutzenseitige Kühlmittelraum, der gehäusedeckelseitige Kühlmittelraum und der gehäuserückwandseitige Kühlmittelraum getrennt voneinander mit Kühlmittel beaufschlagt. Ein zweiter Vorschlag sieht eine Ausführungsvariante vor, bei der wenigstens zwei der vorstehend genannten Kühlmittelräume miteinander in Reihe geschaltet sind. Nach einem dritten Vorschlag ist vorgesehen, dass der saugstutzenseitige Kühlmittelraum ein integraler Abschnitt des gehäusedeckelseitigen Kühlmittelraums ist.

Um die Voraussetzungen für die Spülung des hinteren und des vorderen Laufradspaltes zu schaffen, sieht die Erfindung vor, ausgehend von einer hydraulisch optimierten Zentrifugalpumpe, vorzugsweise einer handelsüblichen Zentrifugalpumpe, dass der hintere und/oder der vordere Laufradspalt, wie folgt, vergrößert sind:
- entweder durch beiderseitiges Abdrehen des Laufrades
- oder durch ein in Richtung einer Pumpenwelle axial wirksames Abstandselement, das zwischen dem Gehäusedeckel und der Gehäuserückwand angeordnet ist, wobei das Laufrad in Bezug zur Gehäuserückwand
   ∘ nicht versetzt oder
   ∘ auf oder mit der Pumpenwelle in der Pumpenkammer entsprechend axial
      ist.

Die Auswahl der hydraulisch optimierten Zentrifugalpumpe für diesen Zweck wird mit Blick auf die vorstehend thematisierte Differenz der Nennförderleistung zwischen gespülter und hydraulisch optimierter Zentrifugalpumpe getroffen.

Die Erfindung umfasst auch ein Laufrad für eine Zentrifugalpumpe, wobei das Laufrad drehbar in der Pumpenkammer der Zentrifugalpumpe aufgenommen und die Zentrifugalpumpe, wie vorstehend dargelegt, ausgebildet ist.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, wird nachfolgend anhand der Zeichnung ein bevorzugtes Ausführungsbeispiel einer erfindungsgemäßen Zentrifugalpumpe, die in ihrem Pumpengehäuse ein erfindungsgemäßes Laufrad aufnimmt, beschrieben. Es zeigen
- **Figur 1**: eine Ansicht der Zentrifugalpumpe in senkrechter Richtung sowohl auf ihre Rotationsachse als auch auf die Längsachse ihres Druckstutzens, wobei die Rotationsachse der Zentrifugalpumpe in Richtung der Schwerkraft orientiert ist;
- **Figur 2**: in der Vorderansicht das Laufrad der erfindungsgemäßen Zentrifugalpumpe, wobei die Blickrichtung in die offenen Schaufelkanäle gerichtet ist;
- **Figur 3**: in der Draufsicht einen Meridianschnitt durch das Laufrad gemäß **Figur 2** entsprechend einem dort mit "**B-B**" gekennzeichneten Schnittverlauf;
- **Figur 4**: in der Seitenansicht einen Meridianschnitt durch das Laufrad gemäß **Figur 2** entsprechend einem dort mit "**A-A**" gekennzeichneten Schnittverlauf;
- **Figur 5**: die Vorderansicht des Laufrades gemäß **Figur 2** mit der näherungsweisen Andeutung einer ersten und einer dritten Spülströmung S1, S3 und
- **Figur 6**: die Seitenansicht des Laufrades gemäß **Figur 4** mit der näherungsweisen Andeutung der ersten, einer zweiten und der dritten Spülströmung S1, S2 und S3.

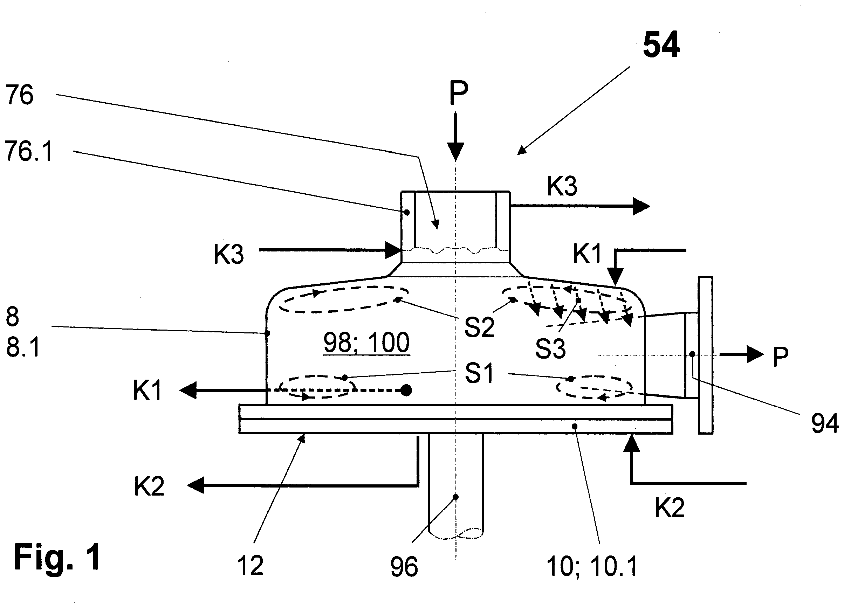

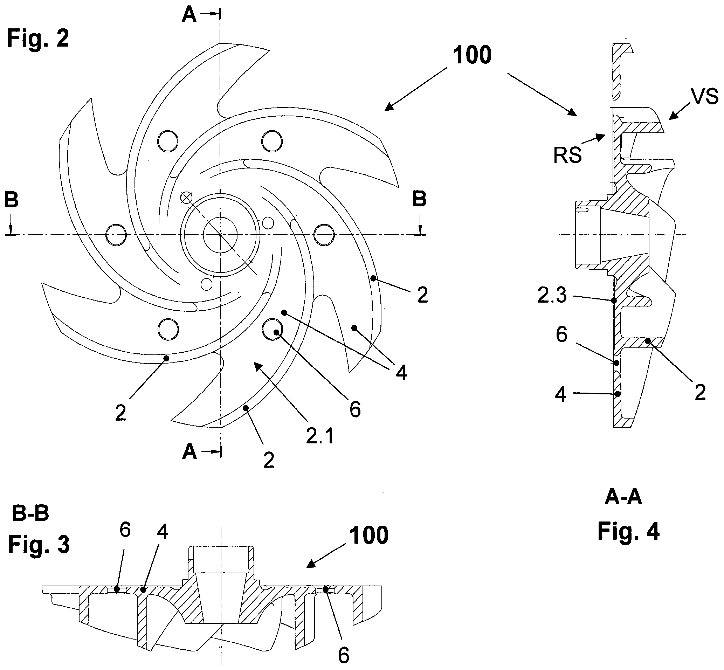

Die in **Figur 1** dargestellte Anordnungslage einer erfindungsgemäßen Zentrifugalpumpe 54, bei der die Rotationsachse einer Pumpenwelle 96 in Schwerkraftrichtung orientiert ist, ist geeignet, um diese Zentrifugalpumpe 54 mit einem Einlass 76, der als Saugstutzen ausgebildet sein kann, unmittelbar an eine Auslassöffnung in einem Bodenteil eines Infusorbehälters anzuschließen (nicht dargestellt). Die Zentrifugalpumpe 54 eignet sich in besonderer Weise zur Förderung hitzeempfindlicher flüssiger Nahrungsmittelprodukte P, wie Molkenproteinkonzentrate, Babynahrung, flüssige Babynahrungskonzentrate, nahrhafte Getränke oder Käsereimilch, die über den Einlass 76 ein- und aus einem als Druckstutzen ausgebildeten Auslass 94 austreten. Die Zentrifugalpumpe 54 besitzt weiterhin in an sich bekannter Weise ein Pumpengehäuse 12, welches von wenigstens einem Gehäusedeckel 8 und einer Gehäuserückwand 10 gebildet ist. Im Pumpengehäuse 12 ist eine in fluidgängiger Verbindung mit dem Einlass 76 und dem Auslass 94 stehende Pumpenkammer 98 ausgebildet, die ein Laufrad 100 (siehe hierzu die **Figuren 2** bis **6****)** drehbar aufnimmt.

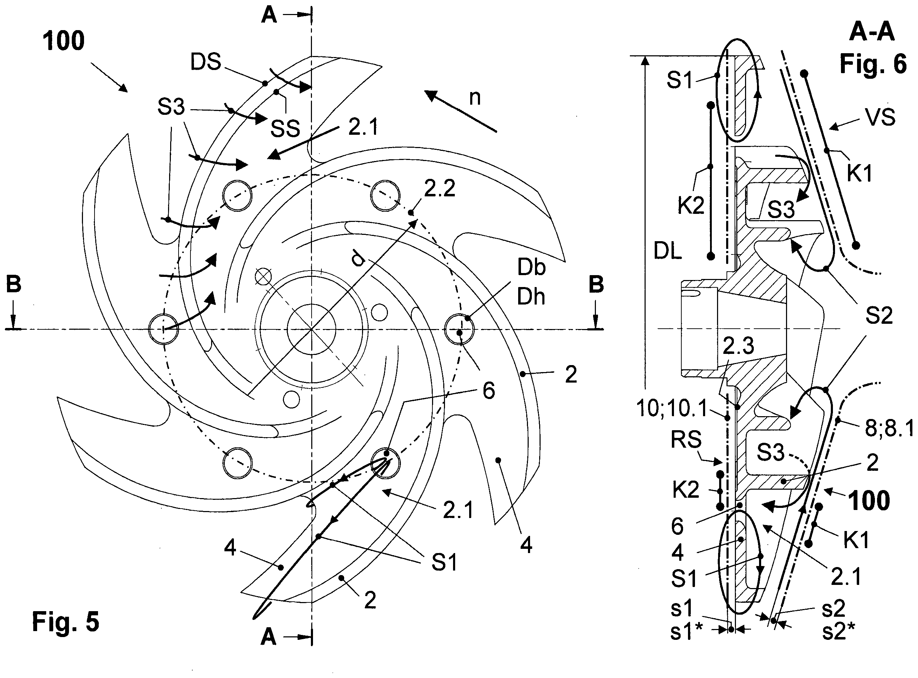

Wenn der Einlass 76 als Saugstutzen ausgebildet ist, dann kann letzterer von einem saugstutzenseitigen Kühlmittelraum 76.1 umschlossen sein, der mit einem Kühlmittel durchströmbar ist und mit dem eine Kühlung des Einlasses K3 durchgeführt wird. Der Gehäusedeckel 8 ist mit einem gehäusedeckelseitigen Kühlmittelraum 8.1 versehen, der den Gehäusedeckel 8 vorzugsweise vollständig umschließt oder teilweise, beispielsweise in Form von Kühltaschen, berandet. Der gehäusedeckelseitige Kühlmittelraum 8.1 ist gleichfalls von einem Kühlmittel durchströmbar und mit ihm wird eine Kühlung des Gehäusedeckels K1 durchgeführt. Die Gehäuserückwand 10 kann mit einem gehäuserückwandseitigen Kühlmittelraum 10.1 versehen sein, der die Gehäuserückwand 10 vollständig oder teilweise, beispielsweise in Form von Kühltaschen, berandet. Der gehäuserückwandseitige Kühlmittelraum 10.1 ist gleichfalls von einem Kühlmittel durchströmbar und mit ihm wird eine Kühlung der Gehäuserückwand K2 durchgeführt. Schließlich zeigt **Figur 1****,** näherungsweise und schematisch angedeutet, eine erste Spülströmung S1, eine zweite Spülströmung S2 und eine dritte Spülströmung S3 gemäß der Erfindung, die in den **Figuren 5** und **6** näher erläutert sind.

Die **Figuren 2** bis **6** zeigen das zum Gehäusedeckel 8 hin offene und zur Gehäuserückwand 10 hin durch eine Laufradrückseite 4 geschlossene Laufrad 100 mit in einer Ebene und bezogen auf eine Drehrichtung n (siehe **Figur 5****)** rückwärtsgekrümmten Schaufeln 2, die jeweils senkrecht auf der Laufradrückseite 4 stehen und einen Schaufelkanal 2.1 bilden. Die rückwärtsgekrümmte Beschaufelung ist kein zwingendes Merkmal des Laufrades 100 für die erfindungsgemäße Zentrifugalpumpe 54; eine vorwärtsgekrümmte oder rein radial orientierte Beschaufelung in ebener oder auch räumlicher Krümmung ist mit Blick auf die Realisierung einer erfindungsgemäß gespülten Zentrifugalpumpe ohne Einschränkung ausführbar. Eine im Wesentlichen durch die Laufradrückseite 4 gebildete Rückseite RS des Laufrades 100 ist um einen hinteren Laufradspalt s1 von der Gehäuserückwand 10 beabstandet **(****Figur 6****).** Auch eine im Wesentlichen durch die Vorderkanten der Schaufeln 2 gebildete Vorderseite VS des Laufrades 100 ist um einen vorderen Laufradspalt s2 von dem Gehäusedeckel 8 beabstandet.

Der hintere und/oder der vordere Laufradspalt s1, s2 sind/ist gegenüber jeweils einem diesbezüglichen minimalen hinteren und vorderen Laufradspalt s1*, s2*, der die mechanische Funktionsfähigkeit der Zentrifugalpumpe 54 sicherstellt, durch Reduzierung der Breite des Laufrades 100 in Bereich des vorderen und des hinteren Laufradspaltes s1, s2 bis zu einem Mehrfachen vergrößert.

Eine bevorzugte Ausführungsform sieht vor, dass der vordere Laufradspalt s2 an einem äußeren Laufraddurchmesser DL des Laufrades 100 eine maximale Vergrößerung erfährt, die bis in den Bereich des Eintritts in die Schaufelkanäle 2.1 kontinuierlich bis auf den minimalen vorderen Laufradspalt s2* abnimmt. Eine diesbezügliche Reduzierung der Breite des Laufrades 100 an dem äußeren Laufraddurchmesser DL beträgt vorzugsweise 40 bis 50 %, vorzugsweise hier 45 bis 50 %, der Breite eines hydraulisch optimierten Laufrades.

Jeder Schaufelkanal 2.1 zwischen zwei benachbarten Schaufeln 2 des Laufrades 100 steht im Bereich seiner begrenzenden Laufradrückseite 4 über wenigstens eine die Laufradrückseite 4 durchdringende Spülbohrung 6 mit dem hinteren Laufradspalt s1 in fluidgängiger Verbindung (siehe insbesondere **Figur 6****).**

Eine weitere bevorzugte Ausführungsform sieht vor, dass der Zugang zum minimalen hinteren, vorzugsweise radial orientierten Laufradspalt s1*, der von dem äußeren Laufraddurchmesser DL des Laufrades 100 seinen Anfang nimmt und sich bis zu einer Nabe des Laufrades 100 erstreckt, durch Reduzierung des äußeren Laufraddurchmessers DL um bis zu 5 mm erweitert ist, wodurch das Laufrad 100 radial außenseits gegenüber dem Pumpengehäuse 12 ein Stück weit zurücktritt. Die Vergrößerung des hinteren Laufradspaltes s1 besteht erfindungsgemäß und bevorzugt darin, dass die Laufradrückseite 4 im Bereich zwischen der Spülbohrung 6 und der Nabe des Laufrades 100 eine ringflächenförmige Ausdrehung 2.3 erfährt (siehe **Figuren 4** und **6****),** deren axiale Tiefe bis zu 2 mm, vorzugsweise 0,5 bis 1 mm, beträgt.

Eine Bemessung des vorderen und/oder des hinteren Laufradspaltes s1, s2 in der vorstehend beschriebenen Weise ist abhängig von den spezifischen Eigenschaften des erhitzten flüssigen Nahrungsmittelprodukts P und wird vorzugsweise im Feldversuch ermittelt.

Nach einer bevorzugten Ausführungsform sind bei einer einzigen Spülbohrung 6 in jedem Schaufelkanal 2.1 alle diese Spülbohrungen 6 auf einem einzigen Lochkreis 2.2 mit einem Lochkreisdurchmesser d angeordnet. Dabei ist der geometrische Ort für die jeweilige Durchdringungsstelle der Spülbohrung 6 mit der Laufradrückseite 4, der auch den Lochkreisdurchmesser d festlegt, näherungsweise bestimmt durch die Mitte des Schaufelkanals 2.1, bezogen auf den Abstand der Schaufeln 2 an der Durchdringungsstelle, und weiterhin näherungsweise bestimmt durch die Mitte einer maximalen Stromfadenlänge des Schaufelkanals 2.1 zwischen dessen Ein- und Austritt.

Die Spülbohrung 6 ist entweder vorzugsweise kreisförmig mit einem Bohrungsdurchmesse Db ausgeführt oder sie weist alternativ eine von der Kreisform abweichende Form mit einem für diese Form maßgeblichen hydraulischen Durchmesser Dh auf. Dabei wird bevorzugt vorgeschlagen, dass der Bohrungsdurchmesser Db oder der hydraulische Durchmesser Dh 30 bis 50 % und in diesem Bereich bevorzugt 40 bis 50 % vom Abstand der Schaufeln 2 an der Durchdringungsstelle beträgt.

Die Erfindung sieht weiterhin vor, dass mehr als eine Spülbohrung 6 in jedem Schaufelkanal 2.1 vorgesehen sind, dass jede der mehreren Spülbohrungen 6 eines Schaufelkanals 2.1 auf einem zugeordneten Lochkreis 2.2 angeordnet ist, und dass die Lochkreise 2.2 radial voneinander beabstandet sind. Die Spülbohrungen 6 auf unterschiedlichen Lochkreisen 2.2 können mit gleichen Durchmessern Db bzw. hydraulischen Durchmessern Dh oder von Lochkreis zu Lochkreis mit unterschiedlichen Durchmessern Db bzw. hydraulischen Durchmessern Dh ausgeführt sein. Wegen der, in radialer Richtung gesehen, von innen nach außen abnehmenden Druckdifferenz zwischen hinterem Radseitenraum und dem Schaufelkanal 2.1 sieht ein vorteilhafte Ausführungsform vor, dass die Durchtrittsquerschnitte der Spülbohrungen 6 auf den verschiedenen Lochkreisen 2.2 mit kleiner werdendem Lochkreisdurchmesser d kleiner werden. Die Durchmesser Db bzw. Dh der Spülbohrungen 6 werden somit tendenziell kleiner, je näher sie an den Nabenbereich des Laufrades 100 heranrücken, wenn ein bestimmter Spülvolumenstrom erreicht werden soll.

Wenigstens der Gehäusedeckel 8 ist erfindungsgemäß mit dem von einem Kühlmittel durchströmbaren gehäusedeckelseitigen Kühlmittelraum 8.1 versehen. Eine Intensivierung der Kühlung wird erreicht, wenn auch die Gehäuserückwand 10 mit dem von einem Kühlmittel durchströmbaren gehäuserückwandseitigen Kühlmittelraum 10.1 ausgestattet ist. Nach einer vorteilhaften Ausführungsform ist zusätzlich zu dem gehäusedeckelseitigen Kühlmittelraum 8.1 und dem gehäuserückwandseitigen Kühlmittelraum 10.1 der Einlass 76, wenn er als Saugstutzen ausgebildet ist, mit dem saugstutzenseitigen Kühlmittelraum 76.1 versehen. Es wird vorgeschlagen, dass der saugstutzenseitige Kühlmittelraum 76.1, der gehäusedeckelseitige Kühlmittelraum 8.1 und der gehäuserückwandseitige Kühlmittelraum 10.1 getrennt voneinander mit Kühlmittel beaufschlagt sind. Eine andere Ausführungsform sieht vor, dass wenigstens zwei Kühlmittelräume 76.1, 8.1, 10.1 miteinander in Reihe geschaltet sind. Nach einem weiteren Vorschlag ist der saugstutzenseitige Kühlmittelraum 76.1 ein integraler Abschnitt des gehäusedeckelseitigen Kühlmittelraums 8.1.

Folgende Maßnahmen, mit denen eine Zentrifugalpumpe nach dem Stand der Technik erfindungsgemäß zu modifizieren ist, stellen in Kombination miteinander oder jeweils auch für sich allein gesehen die erfindungsgemäße Spülung des Laufrades 100 sicher:
- Verbreiterung des hinteren Laufradspaltes s1 und/oder des vorderen Laufradspaltes s2 (siehe **Figur 6****)**
   ∘ entweder durch beiderseitiges Abdrehen des Laufrades 100
   ∘ oder durch ein in Richtung der Pumpenwelle 96 axial wirksames Abstandselement, das zwischen dem Gehäusedeckel 8 und der Gehäuserückwand 10 angeordnet ist, wobei das Laufrad 100 in Bezug zur Gehäuserückwand 10
      ∘ nicht versetzt
      ∘ oder auf oder mit der Pumpenwelle 96 in der Pumpenkammer 98 entsprechend axial versetzt
         ist.
- Anordnung von vorgenannten Spülbohrungen 6 in der vorstehend beschriebenen Weise.

Die **Figuren 5** und **6** verdeutlichen die Wirkungen der erfindungsgemäßen vorstehenden Maßnahmen. Durch die Verbreiterung des hinteren Laufradspaltes s1 bzw. durch den erweiterten Zugang zu diesem wird der zugeordnete hintere Radseitenraum mehr oder weniger ungedrosselt mit dem an der Austrittsseite des Laufrades 2, das dort den äußeren Laufraddurchmesser DL besitzt, herrschenden statischen Druck über seinen gesamten radialen Erstreckungsbereich beaufschlagt. An der jeweiligen Spülbohrung 6 liegt im Schaufelkanal 2.1 ein geringerer statischer Druck als im hinteren Radseitenraum an. Dadurch ergibt sich im Schaufelkanal 2.1 die radial von innen nach außen gerichtete erste Spülströmung S1, wie in **Figur 6** und in **Figur 5****,** in letzterer nur beispielhaft an einem Schaufelkanal 2.1 gezeigt, dargestellt ist. Da das im hinteren Radseitenraum befindliche erhitzte flüssige Nahrungsmittelprodukt P an der Gehäuserückwand 10 gekühlt werden kann, weil dort gegebenenfalls die Kühlung der Gehäuserückwand K2 vorgesehen ist, gelangt nun durch die erste Spülströmung S1 permanent gekühltes flüssiges Nahrungsmittelprodukt P vorzugsweise in den Kernbereich der Strömung im Schaufelkanal 2.1.

Durch die beschriebene Verbreiterung des vorderen Laufradspaltes s2 kann sich, wie dies in **Figur 5** im linken oberen Quadranten des Laufrades 100 gezeigt ist, über die jeweilige stirnseitige, freie Vorderkante der Schaufel 2 und über deren radialen Erstreckungsbereich gesehen, die dritte Spülströmung S3 ausbilden. Die Triebkräfte für diese dritte Spülströmung S3 resultieren aus dem Druckunterschied an jeder Schaufel 2, der durch den statischen Druck auf der Schaufeloberseite, einer Druckseite DS, und durch den statischen Druck auf der Schaufelunterseite, einer Saugseite SS, gegeben ist. Die dritte Spülströmung S3 sorgt für eine zusätzliche Bewegung gegenüber dem und überwiegend in Umfangsrichtung zum Gehäusedeckel 8 und damit für eine forcierte Kühlung des flüssigen Nahrungsmittelprodukts P, weil in diesem Gehäusedeckel 8 die Kühlung des Gehäusedeckels K1 installiert ist (siehe **Figur 6****).** Die dritte Spülströmung S3 bewirkt auch hier einen Austausch des flüssigen Nahrungsmittelprodukts P in den und aus dem Kernbereich der Strömung im zugeordneten Schaufelkanal 2.1.

Durch den verbreiterten vorderen Laufradspalt s2 kann sich wegen des Unterschiedes des statischen Druckes am Austritt des Laufrades 100 und des statischen Druckes im saugseitigen Eintritt des Laufrades 100 die radial orientierte zweite Spülströmung S2 ausbilden (siehe **Figur 6****),** der die dritte Spülströmung S3 überlagert ist. Diese zweite Spülströmung S2 sorgt auch hier für einen Austausch des flüssigen Nahrungsmittelprodukts P in den und aus dem Kernbereich der Strömung im zugeordneten Schaufelkanal 2.1.

### Ausführungsbeispiel einer erfindungsgemäßen Zentrifugalpumpe 54:

Die Zentrifugalpumpe 54 wird von einem Antriebsmotor mit einer Nennleistung von 15 kW bei einer Nenndrehzahl n = 2900 1/min angetrieben. Der äußere Laufraddurchmesser DL ist von ursprünglich 205 mm auf 195 mm abgedreht. Die Laufradbreite am äußeren Laufraddurchmesser DL ist von ursprünglich 19 mm auf 9 mm reduziert, wobei die Reduzierung bis in den Bereich des Eintritts in die Schaufelkanäle 2.1 kontinuierlich bis auf den minimalen vorderen Laufradspalt s2* abnimmt. Der hintere Laufradspalt s1 ist im Bereich der ringflächenförmigen Ausdrehung 2.3 gegenüber dem minimalen hinteren Laufradspalt s1* um 0,7 mm vergrößert. Jede Spülbohrung 6 im zugeordneten Schaufelkanal 2.1 der insgesamt sechs Schaufelkanäle 2.1 ist kreisförmig ausgeführt und besitzt einen Bohrungsdurchmesser Db = 10 mm.

### BEZUGSZEICHENLISTE DER VERWENDETEN ABKÜRZUNGEN

- 54: Zentrifugalpumpe

- 76: Einlass (Saugstutzen)
- 76.1: saugstutzenseitiger Kühlmittelraum

- 94: Auslass (Druckstutzen)
- 96: Pumpenwelle
- 98: Pumpenkammer
- 100: Laufrad

- 2: Schaufel
- 2.1: Schaufelkanal
- 2.2: Lochkreis
- 2.3: ringflächenförmige Ausdrehung

- 4: Laufradrückseite
- 6: Spülbohrung

- 8: Gehäusedeckel
- 8.1: gehäusedeckelseitiger Kühlmittelraum

- 10: Gehäuserückwand
- 10.1: gehäuserückwandseitiger Kühlmittelraum

- 12: Pumpengehäuse

- DL: äußerer Laufraddurchmesser
- Db: Bohrungsdurchmesser
- Dh: hydraulischer Durchmesser

- DS: Druckseite (der Schaufel)
- K1: Kühlung des Gehäusedeckels
- K2: Kühlung der Gehäuserückwand
- K3: Kühlung des Einlasses (des Saugstutzens)

- P: flüssiges Nahrungsmittelprodukt

- RS: Rückseite
- SS: Saugseite (der Schaufel)

- S1: erste Spülströmung
- S2: zweite Spülströmung
- S3: dritte Spülströmung

- VS: Vorderseite

- d: Lochkreisdurchmesser

- s1: hinterer Laufradspalt
- s1*: minimaler hinterer Laufradspalt
- s2: vorderer Laufradspalt
- s2*: minimaler vorderer Laufradspalt

- n: Drehrichtung

## Patentansprüche

1. Zentrifugalpumpe (54) zur Förderung hitzeempfindlicher flüssiger Nahrungsmittelprodukte (P), wie Molkenproteinkonzentrate, Babynahrung, flüssige Babynahrungskonzentrate, nahrhafte Getränke oder Käsereimilch, mit einem Einlass (76), einem Auslass (94), einem Pumpengehäuse (12), welches von wenigstens einem Gehäusedeckel (8) und einer Gehäuserückwand (10) gebildet ist, einer im Pumpengehäuse (12) ausgebildeten und in fluidgängiger Verbindung mit dem Einlass (76) und dem Auslass (94) stehenden Pumpenkammer (98), einem in der Pumpenkammer (98) drehbar aufgenommenen Laufrad (100) mit Schaufeln (2), einem zwischen zwei benachbarten Schaufeln (2) jeweils ausgebildeten Schaufelkanal (2.1), der zum Gehäusedeckel (8) hin offen und zur Gehäuserückwand (10) hin durch eine Laufradrückseite (4) geschlossen ausgebildet ist, einem zwischen der Gehäuserückwand (10) und dem Laufrad (100) vorgesehenen hinteren Laufradspalt (s1) und einem zwischen dem Gehäusedeckel (8) und dem Laufrad (100) vorgesehenen vorderen Laufradspalt (s2),
**dadurch gekennzeichnet,**
• **dass** der hintere und/oder der vordere Laufradspalt (s1, s2) gegenüber jeweils einem diesbezüglichen minimalen hinteren und vorderen Laufradspalt (s1*, s2*), der die mechanische Funktionsfähigkeit der Zentrifugalpumpe (54) sicherstellt, durch Reduzierung der Breite des Laufrades (100) im Bereich des vorderen und des hinteren Laufradspaltes (s1, s2) bis zu einem Mehrfachen vergrößert sind/ist, um das Laufrad (100) selbst und seine angrenzenden kritischen Bereiche (s1, s2) bis zur unmittelbaren pumpengehäuseseitigen Berandung der Laufradvorderseite, dem Gehäusedeckel (8), und der Laufradrückseite, der Gehäuserückwand (10), mit dem zu fördernden flüssigen Nahrungsmittelprodukt (P) planmäßig zu spülen, und
• **dass** wenigstens der Gehäusedeckel (8) mit einem von einem Kühlmittel durchströmbaren Kühlmittelraum (8.1) versehen ist, um gleichzeitig wenigstens die durch die Spülvolumenströme aus dem Kern der Schaufelkanäle (2.1) an die gekühlten Wandungen des Gehäusedeckels (8) geführten Volumina zu kühlen.

2. Zentrifugalpumpe nach Anspruch 1,
**dadurch gekennzeichnet,**
**dass** die Gehäuserückwand (10) mit einem von einem Kühlmittel durchströmbaren Kühlmittelraum (10.1) versehen ist.

3. Zentrifugalpumpe nach Anspruch 1 oder 2,
**dadurch gekennzeichnet,**
**dass** der Einlass (76) in Form eines am Gehäusedeckel (8) vorspringenden Saugstutzens ausgebildet ist, der mit einem saugstutzenseitigen Kühlmittelraum (76.1) versehen ist.

4. Zentrifugalpumpe nach einem der vorhergehenden Ansprüche,
**dadurch gekennzeichnet,**
**dass** jeder Schaufelkanal (2.1) im Bereich seiner begrenzenden Laufradrückseite (4) über wenigstens eine die Laufradrückseite (4) durchdringende Spülbohrung (6) mit dem hinteren Laufradspalt (s1) in fluidgängiger Verbindung steht.

5. Zentrifugalpumpe nach einem der vorhergehenden Ansprüche,
**dadurch gekennzeichnet,**
**dass** der vordere Laufradspalt (s2) an einem äußeren Laufraddurchmesser (DL) des Laufrades (100) eine maximale Vergrößerung erfährt, die bis in den Bereich des Eintritts in die Schaufelkanäle (2.1) kontinuierlich bis auf den minimalen vorderen Laufradspalt (s2*) abnimmt.

6. Zentrifugalpumpe nach Anspruch 5,
**dadurch gekennzeichnet,**
**dass** die Reduzierung der Breite des Laufrades (100) an dem äußeren Laufraddurchmesser (DL) 40 bis 55 % der Breite eines hydraulisch optimierten Laufrades beträgt.

7. Zentrifugalpumpe nach Anspruch 5,
**dadurch gekennzeichnet,**
**dass** die Reduzierung 50 bis 55 % der Breite eines hydraulisch optimierten Laufrades beträgt

8. Zentrifugalpumpe nach Anspruch 4 oder nach Ansprüchen 5-7 in Abhängigkeit von Anspruch 4,
**dadurch gekennzeichnet,**
• **dass** der Zugang zum minimalen hinteren Laufradspalt (s1*), der von einem äußeren Laufraddurchmesser (DL) des Laufrades (100) seinen Anfang nimmt und sich bis zu einer Nabe des Laufrades (100) erstreckt, durch Reduzierung des äußeren Laufraddurchmessers (DL) um bis zu 5 mm erweitert ist, und
• **dass** eine Vergrößerung des hinteren Laufradspaltes (s1) darin besteht, dass die Laufradrückseite (4) im Bereich zwischen der Spülbohrung (6) und der Nabe des Laufrades (100) eine ringflächenförmige Ausdrehung (2.3) erfährt, deren axiale Tiefe bis zu 2 mm beträgt.

9. Zentrifugalpumpe nach Anspruch 8,
**dadurch gekennzeichnet,**
**dass** die axiale Tiefe der Ausdrehung (2.3) 0,5 bis 1 mm beträgt.

10. Zentrifugalpumpe nach Ansprüchen 4, 7-9 oder nach Ansprüchen 5-7 in Abhängigkeit von Anspruch 4,
**dadurch gekennzeichnet,**
**dass** bei einer einzigen Spülbohrung (6) in jedem Schaufelkanal (2.1) alle diese Spülbohrungen (6) auf einem einzigen Lochkreis (2.2) angeordnet sind.

11. Zentrifugalpumpe nach Ansprüchen 4, 7-10 oder nach Ansprüchen 5-7 in Abhängigkeit von Anspruch 4,
**dadurch gekennzeichnet,**
**dass** der geometrische Ort für die jeweilige Durchdringungsstelle der Spülbohrung (6) mit der Laufradrückseite (4), der auch einen Lochkreisdurchmesser (d) festlegt,
• näherungsweise durch die Mitte des Schaufelkanals (2.1), bezogen auf den Abstand der Schaufeln (2) an der Durchdringungsstelle, und
• näherungsweise durch die Mitte einer maximalen Stromfadenlänge des Schaufelkanals (2.1) zwischen dessen Ein- und Austritt
bestimmt ist.

12. Zentrifugalpumpe nach Ansprüchen 4, 7-11 oder nach Ansprüchen 5-7 in Abhängigkeit von Anspruch 4,
**dadurch gekennzeichnet,**
**dass** die Spülbohrung (6) kreisförmig mit einem Bohrungsdurchmesser (Db) ausgeführt ist.

13. Zentrifugalpumpe nach Ansprüchen 4, 7-12 oder nach Ansprüchen 5-7 in Abhängigkeit von Anspruch 4,
**dadurch gekennzeichnet,**
**dass** die Spülbohrung (6) eine von der Kreisform abweichende Form mit einem für diese Form maßgeblichen hydraulischen Durchmesser (Dh) aufweist.

14. Zentrifugalpumpe nach Anspruch 12 oder 13,
**dadurch gekennzeichnet,**
**dass** der Bohrungsdurchmesser (Db) oder der hydraulische Durchmesser (Dh) 30 % bis 50 % vom Abstand der Schaufeln (2) an der Durchdringungsstelle beträgt.

15. Zentrifugalpumpe nach Anspruch 12 oder 13,
**dadurch gekennzeichnet,**
**dass** der Bohrungsdurchmesser (Db) oder der hydraulische Durchmesser (Dh) 40 bis 50 % vom Abstand der Schaufeln (2) an der Durchdringungsstelle beträgt.

16. Zentrifugalpumpe nach Anspruch 3 oder nach Ansprüchen 4-15 in Abhängigkeit von Anspruch 3,
**dadurch gekennzeichnet,**
**dass** der saugstutzenseitige Kühlmittelraum (76.1), der gehäusedeckelseitige Kühlmittelraum (8.1) und der gehäuserückwandseitige Kühlmittelraum (10.1) getrennt voneinander mit Kühlmittel beaufschlagt sind.

17. Zentrifugalpumpe nach Anspruch 2 oder nach Ansprüchen 3-15 in Abhängigkeit von Anspruch 2,
**dadurch gekennzeichnet,**
**dass** wenigstens zwei Kühlmittelräume (76.1, 8.1, 10.1) miteinander in Reihe geschaltet sind.

18. Zentrifugalpumpe nach Anspruch 3,
**dadurch gekennzeichnet,**
**dass** der saugstutzenseitige Kühlmittelraum (76.1) ein integraler Abschnitt des gehäusedeckelseitigen Kühlmittelraums (8.1) ist.

19. Zentrifugalpumpe nach einem der vorhergehenden Ansprüche,
**dadurch gekennzeichnet,**
**dass**, ausgehend von einer hydraulisch optimierten Zentrifugalpumpe, der hintere und/oder der vordere Laufradspalt (s1, s2) vergrößert sind/ist, und zwar
• entweder durch beiderseitiges Abdrehen des Laufrades (100)
• oder durch ein in Richtung einer Pumpenwelle (96) axial wirksames Abstandselement, das zwischen dem Gehäusedeckel (8) und der Gehäuserückwand (10) angeordnet ist, wobei das Laufrad (100) in Bezug zur Gehäuserückwand (10)
• nicht versetzt
• oder auf oder mit der Pumpenwelle (96) in der Pumpenkammer (98) entsprechend axial versetzt
ist.

## Claims

1. A centrifugal pump (54) for conveying heat-sensitive fluid food products (P), such as whey protein concentrates, baby food, fluid baby food concentrates, nutritious beverages or cheese milk, with an inlet (76), an outlet (94), a pump housing (12) which is formed by at least one housing cover (8) and a housing rear wall (10), a pump chamber (98) which is configured in the pump housing (12) and which is fluidically connected to the inlet (76) and the outlet (94), an impeller (100) which is rotatably received in the pump chamber (98) and which has blades (2), a blade channel (2.1) which is configured in each case between two adjacent blades (2) and which is configured to be open toward the housing cover (8) and closed toward the housing rear wall (10) by an impeller rear face (4), a rear impeller gap (s1) which is provided between the housing rear wall (10) and the impeller (100), and a front impeller gap (s2) which is provided between the housing cover (8) and the impeller (100),
**characterized**
• **in that** the rear and/or the front impeller gap (s1, s2) are/is enlarged up to a multiple in each case relative to a relevant minimum rear and front impeller gap (s1^{∗}, s2^{∗}), which ensures the mechanical functionality of the centrifugal pump (54) by reducing the width of the impeller (100) in the region of the front and the rear impeller gap (s1, s2), in order to flush the impeller (100) itself and the adjoining critical regions (s1, s2) thereof as far as the immediate pump housingside boundary of the impeller front face, the housing cover (8) and the impeller rear face, and the housing rear wall (10) in a methodical manner with the fluid food product (P) to be conveyed, and
• **in that** at least the housing cover (8) is provided with a coolant chamber (8.1), a coolant being able to flow through said coolant chamber in order to cool simultaneously at least the volumes conducted by the flushing volume flows from the core of the blade channels (2.1) onto the cooled walls of the housing cover (8).

2. The centrifugal pump according to claim 1,
**characterized**
**in that** the housing rear wall (10) is provided with a coolant chamber (10.1), a coolant being able to flow through said coolant chamber.

3. The centrifugal pump according to claim 1 or 2,
**characterized**
**in that** the inlet (76) is configured in the form of a suction port which projects from the housing cover (8) and which is provided with a suction port-side coolant chamber (76.1).

4. The centrifugal pump according to one of the preceding claims,
**characterized**
**in that** each blade channel (2.1), in the region of the defining impeller rear face (4) thereof, is fluidically connected to the rear impeller gap (s1) via at least one flushing bore (6) penetrating the impeller rear face (4).

5. The centrifugal pump according to one of the preceding claims,
**characterized**
**in that**, on an outer impeller diameter (DL) of the impeller (100), the front impeller gap (s2) is subjected to a maximum enlargement which reduces continuously to the minimum front impeller gap (s2^{∗}) into the region of entry into the blade channels (2.1).

6. The centrifugal pump according to claim 5,
**characterized**
**in that** the reduction in the width of the impeller (100) on the outer impeller diameter (DL) is 40 to 55% of the width of a hydraulically optimized impeller.

7. The centrifugal pump according to claim 5,
**characterized**
**in that** the reduction is 50 to 55% of the width of a hydraulically optimized impeller.

8. The centrifugal pump according to claim 4 or according to claims 5 - 7, as dependent on claim 4,
**characterized**
• **in that** the access to the minimum rear impeller gap (s1^{∗}), which starts from an outer impeller diameter (DL) of the impeller (100) and extends as far as a hub of the impeller (100), is widened by up to 5 mm by reducing the outer impeller diameter (DL), and
• **in that** an enlargement of the rear impeller gap (s1) consists in that an annular surface-shaped recess (2.3) is applied to the impeller rear face (4) in the region between the flushing bore (6) and the hub of the impeller (100), the axial depth of said recess being up to 2 mm.

9. The centrifugal pump according to claim 8,
**characterized**
**in that** the axial depth of the recess (2.3) is 0.5 to 1 mm.

10. The centrifugal pump according to claims 4, 7 - 9 or according to claims 5 - 7, as dependent on claim 4,
**characterized**
**in that** in the case of a single flushing bore (6) in each blade channel (2.1), all of these flushing bores (6) are arranged on a single hole circle (2.2).

11. The centrifugal pump according to claims 4, 7 - 10 or according to claims 5 - 7, as dependent on claim 4,
**characterized**
**in that**, relative to the impeller rear face (4), the geometric location of the respective penetration point of the flushing bore (6), which also defines a hole circle diameter (d),
• is approximately determined by the center of the blade channel (2.1), relative to the spacing of the blades (2) at the penetration point, and
• is approximately determined by the center of a maximum stream filament length of the blade channel (2.1) between the inlet and outlet thereof.

12. The centrifugal pump according to claims 4, 7 - 11 or according to claims 5 - 7, as dependent on claim 4,
**characterized**
**in that** the flushing bore (6) is designed to be circular with a bore diameter (Db).

13. The centrifugal pump according to claims 4, 7 - 12 or according to claims 5 - 7, as dependent on claim 4,
**characterized**
**in that** the flushing bore (6) has a shape which deviates from the circular shape and which has a hydraulic diameter (Dh) which is relevant to this shape.

14. The centrifugal pump according to claim 12 or 13
**characterized**
**in that** the bore diameter (Db) or the hydraulic diameter (Dh) is 30% to 50% of the spacing of the blades (2) at the penetration point.

15. The centrifugal pump according to claim 12 or 13,
**characterized**
**in that** the bore diameter (Db) or the hydraulic diameter (Dh) is 40 to 50% of the spacing of the blades (2) at the penetration point.

16. The centrifugal pump according to claim 3 or according to claims 4 - 15, as dependent on claim 3,
**characterized**
**in that** the suction port-side coolant chamber (76.1), the housing cover-side coolant chamber (8.1) and the housing rear wall-side coolant chamber (10.1) are charged with coolant separately from one another.

17. The centrifugal pump according to claim 2 or according to claims 3 - 15, as dependent on claim 2,
**characterized**
**in that** at least two coolant chambers (76.1, 8.1, 10.1) are connected to one another in series.

18. The centrifugal pump according to claim 3,
**characterized**
**in that** the suction port-side coolant chamber (76.1) is an integral portion of the housing cover-side coolant chamber (8.1).

19. The centrifugal pump according to one of the preceding claims,
**characterized**
**in that**, proceeding from a hydraulically optimized centrifugal pump, the rear and/or the front impeller gap (s1, s2) are/is enlarged, and namely
• either by lathe-machining the impeller (100) on either side
• or by a spacer element which acts axially in the direction of a pump shaft (96) and which is arranged between the housing cover (8) and the housing rear wall (10), wherein the impeller (100), relative to the housing rear wall (10),
• is not offset
• or is correspondingly axially offset on or with the pump shaft (96) in the pump chamber (98).

## Revendications

1. Pompe centrifuge (54) destinée à transporter des produits alimentaires liquides sensibles à la chaleur (P), tels que des lactosérums, de la nourriture pour bébé, des concentrés de nourriture pour bébé, des boissons nutritives ou du lait de fromagerie, comprenant une entrée (76), une sortie (94), un boîtier de pompe (12) constitué au moins d'un couvercle de boîtier (8) et d'une paroi arrière de boîtier (10), une chambre de pompe (98) formée dans le boîtier de pompe (12) et en communication fluidique avec l'entrée (76) et la sortie (94), un rotor (100) avec des pales (2), lequel est reçu de façon rotative dans la chambre de pompe (98), un canal de pales (2.1) formé respectivement entre deux pales (2) voisines, lequel est ouvert vers le couvercle de boîtier (8) et fermé vers la paroi arrière de boîtier (10) par un côté arrière de rotor (4), une fente de rotor arrière (s1) prévue entre la paroi arrière de boîtier (10) et le rotor (100) et une fente de rotor avant (s2) prévue entre le couvercle de boîtier (8) et le rotor (100),
**caractérisée en ce que**
• la fente de rotor arrière et/ou avant (s1, s2) est/sont agrandie(s) jusqu'à un multiple par rapport à une fente de rotor arrière et/ou avant minimale (s1^{∗}, s2^{∗}) correspondante garantissant le bon fonctionnement mécanique de la pompe centrifuge (54), par réduction de la largeur du rotor (100) dans la région des fentes de rotor avant et arrière (s1, s2), afin de rincer le rotor (100) lui-même ainsi que ses régions critiques adjacentes (s1, s2) directement jusqu'à un bord du côté avant du rotor côté boîtier de pompe, au couvercle de boîtier (8), et au côté arrière du rotor, à la paroi arrière de boîtier (10), avec le produit alimentaire liquide sensible à la chaleur (P) à transporter, et
• **en ce qu'**au moins le couvercle de boîtier (8) est doté d'un espace de fluide de refroidissement (8.1) susceptible d'être traversé par un fluide de refroidissement pour refroidir simultanément au moins les volumes guidés par les flux volumiques de rinçage hors du cœur des canaux de pales (2.1) vers les parois refroidies du couvercle de boîtier (8).

2. Pompe centrifuge selon la revendication 1,
**caractérisée en ce que**
la paroi arrière de boîtier (10) est dotée d'un espace de fluide de refroidissement (10.1) susceptible d'être traversé par un fluide de refroidissement.

3. Pompe centrifuge selon la revendication 1 ou 2,
**caractérisée en ce que**
l'entrée (76) est réalisée sous la forme d'une tubulure d'aspiration faisant saillie sur le couvercle de boîtier (8), laquelle est dotée d'un espace de fluide de refroidissement côté tubulure d'aspiration (76.1).

4. Pompe centrifuge selon l'une des revendications précédentes,
**caractérisée en ce que**
dans la région de son côté arrière de rotor (4) de délimitation, chaque canal de pales (2.1) est en communication fluidique avec la fente de rotor arrière (s1) par le biais d'au moins un trou de rinçage (6) traversant le côté arrière de rotor (4)

5. Pompe centrifuge selon l'une des revendications précédentes,
**caractérisée en ce que**
au niveau d'un diamètre extérieur de rotor (DL) du rotor (100), la fente de rotor avant (s2) connaît un agrandissement maximal, lequel diminue continuellement jusqu'à la fente de rotor avant minimale (s2^{∗}) jusque dans la région de l'entrée dans les canaux de pales (2.1).

6. Pompe centrifuge selon la revendication 5,
**caractérisée en ce que**
au niveau du diamètre extérieur de rotor (DL), la réduction de la largeur du rotor (100) mesure entre 40% et 55% de la largeur d'un rotor optimisé hydrauliquement.

7. Pompe centrifuge selon la revendication 5,
**caractérisée en ce que**
la réduction mesure entre 50% et 55% de la largeur d'un rotor optimisé hydrauliquement.

8. Pompe centrifuge selon la revendication 4 ou selon les revendications 5 à 7 en dépendance de la revendication 4,
**caractérisée en ce que**
• l'accès à la fente de rotor arrière minimale (s1^{∗}), lequel commence au niveau d'un diamètre extérieur de rotor (DL) du rotor (100) et s'étend jusqu'à proximité d'un moyeu du rotor (100), est élargi jusqu'à 5 mm par réduction du diamètre extérieur de rotor (DL), et
• **en ce qu'**un agrandissement de la fente de rotor arrière (s1) consiste dans le fait que le côté arrière de rotor (4) bénéficie d'un alésage en forme de surface annulaire (2.3) dans la région entre le trou de rinçage (6) et le moyeu du rotor (100), dont la profondeur axiale mesure jusqu'à 2 mm.

9. Pompe centrifuge selon la revendication 8,
**caractérisée en ce que**
la profondeur axiale de l'alésage (2.3) mesure entre 0,5 et 1 mm.

10. Pompe centrifuge selon les revendications 4, 7 à 9 ou selon les revendications 5 à 7 en dépendance de la revendication 4,
**caractérisée en ce que**
pour un seul trou de rinçage (6) dans chaque canal de pales (2.1), tous ces trous de rinçage (6) sont disposés sur un seul cercle de trous (2.2).

11. Pompe centrifuge selon les revendications 4, 7 à 10 ou selon les revendications 5 à 7 en dépendance de la revendication 4,
**caractérisée en ce que**
l'emplacement géométrique pour la zone de passage respective du trou de rinçage (6) avec le côté arrière de rotor (4), lequel définit également un diamètre de cercle de trous (d), est déterminé
• approximativement par le milieu du canal de pales (2.1) par rapport à l'espacement des pales (2) au niveau de la zone de passage, et
• approximativement par le milieu d'une longueur du trajet d'écoulement du canal de pales (2.1) entre l'entrée et la sortie de celui-ci.

12. Pompe centrifuge selon les revendications 4, 7 à 11 ou selon les revendications 5 à 7 en dépendance de la revendication 4,
**caractérisée en ce que**
le trou de rinçage (6) est de forme circulaire avec un diamètre de trou (Db).

13. Pompe centrifuge selon les revendications 4, 7 à 12 ou selon les revendications 5 à 7 en dépendance de la revendication 4,
**caractérisée en ce que**
le trou de rinçage (6) présente une forme différente de la forme circulaire avec un diamètre hydraulique (Dh) adapté à cette forme.

14. Pompe centrifuge selon la revendication 12 ou 13,
**caractérisée en ce que**
le diamètre de trou (Db) ou le diamètre hydraulique (Dh) mesure entre 30 et 50% de l'espacement des pales (2) au niveau de la zone de passage.

15. Pompe centrifuge selon la revendication 12 ou 13,
**caractérisée en ce que**
le diamètre de trou (Db) ou le diamètre hydraulique (Dh) mesure entre 40 et 50% de l'espacement des pales (2) au niveau de la zone de passage.

16. Pompe centrifuge selon la revendication 3 ou selon les revendications 4 à 15 en dépendance de la revendication 3,
**caractérisée en ce que**
l'espace de fluide de refroidissement côté tubulure d'aspiration (76.1), l'espace de fluide de refroidissement côté couvercle de boîtier (8.1) et l'espace de fluide de refroidissement côté paroi arrière de boîtier (10.1) sont sollicités indépendamment les uns des autres par du fluide de refroidissement.

17. Pompe centrifuge selon la revendication 2 ou selon les revendications 3 à 15 en dépendance de la revendication 2,
**caractérisée en ce que**
au moins deux espaces de fluide de refroidissement (76.1, 8.1, 10.1) sont reliés en série.

18. Pompe centrifuge selon la revendication 3,
**caractérisée en ce que**
l'espace de fluide de refroidissement côté tubulure d'aspiration (76.1) est une partie intégrale de l'espace de fluide de refroidissement côté couvercle de boîtier (8.1).

19. Pompe centrifuge selon l'une des revendications précédentes,
**caractérisée en ce que**
sur la base d'une pompe centrifuge optimisée hydrauliquement, la fente de rotor arrière et/ou avant (s1, s2) est/sont agrandie(s), et notamment
• soit par tournage du rotor (100) de part et d'autre
• soit par un élément d'espacement agissant axialement dans le sens d'un arbre de pompe (96), et disposé entre le couvercle de boîtier (8) et la paroi arrière de boîtier (10), dans laquelle le rotor (100)
• n'est pas décalé
• ou est décalé axialement de façon correspondante sur ou avec l'arbre de pompe (96) dans la chambre de pompe (98).
